# EUROPÄISCHE PATENTSCHRIFT

(11) **EP 4 496 913 B1**
(45) Veröffentlichungstag und Bekanntmachung des Hinweises auf die Patenterteilung: **19.11.2025**
(21) Anmeldenummer: 23742181.3
(22) Anmeldetag: 22.06.2023
(51) Int. Cl.: C25B 1/23, C25B 15/021, C25B 15/08, C10G 2/00, H01M 8/04007, H01M 8/04014, H01M 8/04119, H01M 8/0662

(54) **HOCHTEMPERATUR-CO-ELEKTROLYSESYSTEM, HOCHTEMPERATUR-CO-ELEKTROLYSEANLAGE UND VERFAHREN ZUM ERZEUGEN VON SYNTHESEGAS**
HIGH-TEMPERATURE CO-ELECTROLYSIS SYSTEM, HIGH-TEMPERATURE CO-ELECTROLYSER PLANT AND METHOD FOR PRODUCING SYNTHESIS GAS
SYSTÈME DE CO-ÉLECTROLYSE À HAUTE TEMPÉRATURE, INSTALLATION DE CO-ÉLECTROLYSE À HAUTE TEMPÉRATURE ET PROCÉDÉ DE PRODUCTION DE GAZ DE SYNTHÈSE

(30) Priorität: 23.06.2022 AT 504542022
(43) Veröffentlichungstag der Anmeldung: 29.01.2025
(73) Patentinhaber: AVL List GmbH, 8020 Steiermark Graz (AT)
(72) Erfinder: TANDL, Manuel, 8042 Graz (AT); ZAPF, Fabian, 8010 Graz (AT)
(86) Internationale Anmeldenummer: PCT/AT2023/060197
(87) Internationale Veröffentlichungsnummer: WO 2023/245219

(56) Entgegenhaltungen:
- WO-A1-2017/102817
- WO-A1-2022/096229
- US-A1- 2014 272 734
- W.L. BECKER ET AL: "Production of Fischer-Tropsch liquid fuels from high temperature solid oxide co-electrolysis units", ENERGY, vol. 47, no. 1, 1 November 2012 (2012-11-01), AMSTERDAM, NL, pages 99 - 115, XP055361383, ISSN: 0360-5442, DOI: 10.1016/j.energy.2012.08.047

## Beschreibung

Die vorliegende Erfindung betrifft ein Hochtemperatur-Co-Elektrolysesystem, eine Hochtemperatur-Co-Elektrolyseanlage und ein Verfahren zum Erzeugen von Synthesegas mittels eines Elektrolysesystems.

Eine Möglichkeit zur Verringerung der Abhängigkeit von fossilen Rohstoffvorkommen und zur Reduzierung von CO2-Emissionen ist die Substitution von Rohöl durch aus Kohlenstoffdioxid (CO2) und Wasser (H2O) hergestellte synthetische Kohlenwasserstoffe. Unter Zuführung von elektrischem Strom kann dabei durch Hochtemperaturelektrolyse (kurz SOE für Engl. "Solid Oxide Electrolysis") ein Synthesegas erzeugt werden, welches Wasserstoff (H2) und Kohlenstoffmonoxid (CO) beinhaltet. In einem sich anschließenden Syntheseprozess werden aus dem Synthesegas die synthetischen Kohlenwasserstoffe erhalten.

Elektrolysezellensysteme für eine Hochtemperatur-Co-Elektrolyse sind beispielsweise aus der US 2014/272734 A1 und der W.L. BECKER ET AL: "Production of Fischer-Tropsch liquid fuels from high temperature solid oxide co-electrolysis units", ENERGY, Bd. 47, Nr. 1, 1. November 2012 (2012-11-01), Seiten 99-115, XP055361383, AMSTERDAM, NL, ISSN: 0360-5442, DOI: 10.1016/j.energy. 2012.08.047 bekannt.

Es ist Aufgabe der vorliegenden Erfindung, die Effizienz bei der vorstehend beschriebenen Hochtemperaturelektrolyse in kostengünstiger und einfacher Weise zu steigern.

Die voranstehende Aufgabe wird gelöst durch ein Hochtemperatur-Co-Elektrolysesystem mit den Merkmalen des Anspruchs 1, eine Hochtemperatur-Co-Elektrolyseanlage mit den Merkmalen des Anspruchs 13 sowie ein Verfahren mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Hochtemperatur-Co-Elektrolysesystem beschrieben sind, selbstverständlich auch im Zusammenhang mit der erfindungsgemäßen Hochtemperatur-Co-Elektrolyseanlage sowie dem erfindungsgemäßen Verfahren und jeweils umgekehrt, sodass bzgl. der Offenbarung zu den einzelnen Erfindungsaspekten stets wechselseitig Bezug genommen wird oder werden kann.

Erfindungsgemäß ist ein Hochtemperatur-Co-Elektrolysesystem vorgesehen. Das Hochtemperatur-Co-Elektrolysesystem weist einen Elektrolysezellenstapel mit einem Kathodenabschnitt, welcher einen Kathodenzuführabschnitt und einen Kathodenabführabschnitt aufweist, und einem Anodenabschnitt, welcher einen Anodenzuführabschnitt und einen Anodenabführabschnitt aufweist, auf. Ferner weist das Hochtemperatur-Co-Elektrolysesystem einen mittels einer Anodenzuführverbindung fluidtechnisch mit dem Anodenzuführabschnitt gekoppelten Anodengasanschluss zum Zuführen von Anodengas zum Anodenabschnitt auf. Außerdem weist das Hochtemperatur-Co-Elektrolysesystem einen mittels einer Anodenabführverbindung fluidtechnisch mit dem Anodenabführabschnitt gekoppelten Anodenabführanschluss zum Abführen von durch den Elektrolysezellenstapel erzeugten Anodenabgasen auf. Weiterhin weist das Hochtemperatur-Co-Elektrolysesystem einen mittels einer Kathodenzuführverbindung fluidtechnisch mit dem Kathodenzuführabschnitt gekoppelten Kathodenzuführanschluss zum Zuführen von Kathodengas zum Kathodenabschnitt auf. Darüber hinaus weist das Hochtemperatur-Co-Elektrolysesystem einen mittels einer Kathodenabführverbindung fluidtechnisch mit dem Kathodenabführabschnitt gekoppelten Kathodenabführanschluss zum Abführen von durch den Elektrolysezellenstapel erzeugtem Synthesegas auf. Das Hochtemperatur-Co-Elektrolysesystem weist außerdem einen Restgaszuführanschluss zum Bereitstellen von Restgas auf, welches bei einem Syntheseprozess zur Herstellung von synthetischen Kohlenwasserstoffen aus dem von dem Elektrolysezellenstapel erzeugten Synthesegases abgeschieden wird. Das Hochtemperatur-Co-Elektrolysesystem weist ferner zwei mittels einer Restgaszuführverbindung fluidtechnisch mit dem Restgaszuführanschluss gekoppelte und in der Anodenabführverbindung angeordnete Katalysatoren zur katalytischen Verbrennung des Restgases auf, wobei zumindest einer der beiden Katalysatoren als ein Oxidationskatalysator ausgebildet ist. Außerdem weist das Hochtemperatur-Co-Elektrolysesystem einen zweiten Wärmetauscher und einen dritten Wärmetauscher auf, die in der Anodenabführverbindung in Strömungsrichtung hinter zumindest je einem der beiden Katalysatoren angeordnet sind, wobei einer von dem zweiten und dritten Wärmetauscher wärmetechnisch mit der Anodenzuführverbindung gekoppelt ist und wobei der andere von dem zweiten und dritten Wärmetauscher wärmetechnisch mit der Kathodenzuführverbindung gekoppelt ist.

Erfindungsgemäß wird damit die Effizienz eines Elektrolysesystems gesteigert, indem Restgas aus dem Syntheseprozess zur Herstellung von synthetischen Kohlenwasserstoffen zur katalytischen Verbrennung innerhalb von zwei Katalysatoren des Hochtemperatur-Co-Elektrolysesystems genutzt wird. Die bei der katalytischen Verbrennung gewonnene Wärme wird sich innerhalb des Hochtemperatur-Co-Elektrolysesystems durch zumindest einen Wärmetauscher zunutze gemacht. Die zusätzliche Wärme kann an verschiedenen Orten, insbesondere Verbindungen, ganz besondere Zuführverbindungen, wie insbesondere der Anodenzuführverbindung und/oder Kathodenzuführverbindung, in dem Hochtemperatur-Co-Elektrolysesystem bereitgestellt werden und so die Effizienz der Hochtemperatur-Co-Elektrolyse, die von dem Elektrolysezellenstapel ausgeführt wird, um das synthetische Gas oder, mit anderen Worten, Synthesegas zu erzeugen, erhöhen. Gegenüber dem Einsatz etwa eines einzigen Katalysators und paralleler Wärmetauscher hat der Einsatz zweier Katalysatoren den besonderen Vorteil, dass der zweite Wärmetauscher und der dritte Wärmetauscher bei niedrigeren Katalysator-Temperaturen mit derselben Wärmemenge versorgt werden können. Auch könnten bei gleicher Auslass-Zieltemperatur höhere Luft- und/oder Reaktanten-Temperaturen erreicht werden. Diese und weitere Vorteile der Erfindung werden im Folgenden näher erläutert und deutlich.

Im Rahmen der vorliegenden Beschreibung wird der Einfachheit halber von einem Elektrolysezellenstapel gesprochen. Damit ist zumindest ein Elektrolysezellenstapel gemeint. Denn selbstverständlich kann vorgesehen sein, dass mehrere Elektrolysezellenstapel in dem Hochtemperatur-Co-Elektrolysesystem vorgesehen sind, die in beliebiger Weise miteinander verschaltet sein können, z. B. in Reihe oder parallel miteinander verschaltet sein können. Dabei ist dann jeder Kathodenabschnitt und jeder Anodenabschnitt jedes Elektrolysezellenstapels in der hierin beschriebenen Art und Weise fluidtechnisch mit den hierin erwähnten Anschlüssen gekoppelt.

Der Elektrolysezellenstapel kann ganz besonders ein Festoxid-Elektrolysezellenstapel sein. Damit kann das Elektrolysesystem insbesondere ein Festoxid-Elektrolysesystem oder Festoxid-Elektrolyseurzellensystem (auch SOEC-System für engl. "Solid Oxide Electrolyzer Cell System") sein. Der Elektrolysezellenstapel in dem Elektrolysesystem wird im Elektrolysemodus betrieben, insbesondere in einem Co-Elektrolysemodus, um die Elektrolyse von Wasser (H2O) und Kohlenstoffdioxid (CO2) zu erreichen. Durch die Elektrolyten in dem Elektrolysezellenstapel können so Wasserstoffgas (H2), Kohlenstoffmonoxid (CO) und Sauerstoff (O2) produziert werden. Vorteilhaft ist dabei, wenn der Elektrolysezellenstapel zum Erzeugen des Synthesegases mit einer Stromversorgungsquelle zur Bereitstellung von Strom aus einer erneuerbaren Energiequelle verbunden ist. Mit einer solchen Stromversorgungsquelle, die aus erneuerbaren Energiequellen gespeist wird, lässt sich der Hochtemperaturelektrolysebetrieb ökologisch nachhaltig gestalten.

Im Rahmen der Erfindung wird unter dem Hochtemperatur-Co-insbesondere auch ein reversibles Elektrolysesystem verstanden. Bei einem reversiblen Elektrolysesystem kann vorteilhaft zwischen einem Brennstoffzellenbetrieb und einem Elektrolysebetrieb umgeschalten werden.

Für die vorstehend beschriebene Reaktion im Elektrolysebetrieb wird dem Anodenabschnitt durch die Anodenzuführverbindung Anodengas, insbesondere Luft, ganz besonders Frischluft, oder Sauerstoff, zugeführt. Mittels der Kathodenzuführverbindung wird dem Kathodenabschnitt Kathodengas, insbesondere Kohlenstoffdioxid, zugeführt. Der Kathodenzuführanschluss kann dabei mit unterschiedlichen Kohlenstoffdioxid-Quellen verbunden sein. Möglich ist beispielsweise das Entnehmen von Kohlenstoffdioxid aus der Luft, aus Biogas-Prozessen, aus Industrieabgasen usw. Wasser kann dem Kathodenzuführabschnitt über einen ersten Zusatzzuführanschluss zum Zuführen von Wasser zugeführt werden. Dazu kann der erste Zusatzzuführanschluss, der mittels einer ersten Zusatzzuführverbindung mit der Kathodenzuführverbindung oder dem Kathodenzuführabschnitt fluidtechnisch gekoppelt sein kann, dem Kathodenzuführabschnitt Wasser, vorzugsweise in Form von Wasserdampf, zuführen. Alternativ oder zusätzlich kann das Wasser in dem Elektrolysesystem zu Wasserdampf verdampft werden. Der Wasserdampf kann als Teil des Kathodengases angesehen werden, weil es dem Kathodenzuführabschnitt zugeführt wird. Auch ein eventuelles Schutzgas, das der Kathodenzuführverbindung zugeführt wird, kann als Teil des Kathodengases angesehen werden, weil es dem Kathodenzuführabschnitt zugeführt wird. Vom Anodenabführabschnitt werden die Anodenabgase mittels der Anodenabführverbindung zum Anodenabführanschluss abgeführt. Die in der Anodenabführverbindung abgeführten Anodenabgase umfassen insbesondere von dem Elektrolysesystem abgeführte Abluft oder abgeführten Sauerstoff, ganz besonders mit Sauerstoff angereicherte Luft, sowie hinter den Katalysatoren Katalysator-Abgase, also Verbrennungsprodukte der katalytischen Verbrennung des Restgases gemischt mit dem Anodenabgas. Vom Anodenabführanschluss aus können diese beispielsweise in die Umgebung freigesetzt werden. Vom Kathodenabführabschnitt wird das erzeugte Kathodenabgas, welches Synthesegas ist, welches insbesondere hauptsächlich Wasserstoffgas und Kohlenstoffmonoxid enthält, zum Kathodenabführanschluss zugeführt. Dieser kann mit einem entsprechenden Synthesesystem mit einer Syntheseanlage verbunden sein, um dort das synthetische Gas zur Herstellung der synthetischen Kohlenwasserstoffe bereitzustellen. Bei diesem Syntheseprozess kann typischerweise nicht das gesamte Synthesegas umgesetzt werden. Außerdem entstehen beim Syntheseprozess neben den langkettigen Produkten kurzkettige Kohlenwasserstoffe. Der nicht umgesetzte Anteil des Synthesegases bildet gemeinsam mit den kurzkettigen Kohlenwasserstoffen ein Gasgemisch, das insbesondere zum Teil in die Syntheseanlage rezykliert und zum Teil abgeschieden wird. Dieser abgeschiedene Gasanteil wird hierein als Restgas bezeichnet. Es wurde nämlich überraschenderweise herausgefunden, dass dieses Restgas einen hohen Heizwert birgt und sich vorteilhafterweise zur Wärmebereitstellung in der Hochtemperaturelektrolyse einsetzen lässt, womit sich insbesondere in der erfindungsgemäßen Art und Weise die Effizienz des Elektrolysesystems erhöhen lässt.

Zur Unterscheidung von Komponenten oder Elementen gleicher Art oder gleichen Typs voneinander, wie beispielsweise von Wärmetauschern, Absperrorganen, Teilpfaden oder Bypasspfaden, sind die in der vorliegenden Beschreibung erwähnten Komponenten oder Elemente gleicher Art oder gleichen Typs durchnummeriert und werden als erste Komponente, zweite Komponente, dritte Komponente (oder Elemente) usw. bezeichnet, also beispielsweise erster Wärmetauscher, zweiter Wärmetauscher usw. Diese Bezeichnung anhand der Nummerierung dient einzig und allein der Unterscheidung der hierin erwähnten Komponenten oder Elemente gleicher Art oder gleichen Typs und stellt in keiner Weise eine Einschränkung des Schutzbereichs dar. Wenn beispielsweise in einem Anspruch von einer vierten Komponente einer Art oder eines Typs gesprochen wird, dann setzt dies nicht notwendigerweise eine erste, zweite und dritte Komponente dieser Art oder diesen Typs voraus; es sei denn, dass die erste, zweite und dritte Komponente dieser Art oder diesen Typs in einem Anspruch erwähnt werden, auf den sich der betreffende Anspruch zurückbezieht.

Die hierin erwähnten Verbindungen sind fluidführende, insbesondere gasführende, Verbindungen. Die Verbindungen können über verschiedene Pfade oder Leitungen, wie beispielsweise Rohre oder Schläuche, die jeweils miteinander gekoppelt sind, hergestellt sein. In den Verbindungen können verschiedene strömungsbeeinflussende Vorrichtungen angeordnet sein, wie sie hierin erwähnt werden, so beispielsweise Absperrorgane.

Soweit hierin von einer Anordnung eines Wärmetauschers in einer Verbindung und einer wärmetechnischen Kopplung des Wärmetauschers mit einer anderen Verbindung gesprochen wird, so sind diese Merkmale wegen der Funktion des Wärmetauschers synonym zu verstehen. Denn durch den Wärmetauscher wird die Wärme von zwei Strömen in den jeweiligen Verbindungen miteinander ausgetauscht, beispielsweise im Gegenstrom. Insoweit ist der Wärmetauscher tatsächlich in jeder der beiden Verbindungen angeordnet und der Wärmetauscher koppelt auch beide Verbindungen wärmetechnisch miteinander.

Soweit hierin von Kontrolle oder Kontrollieren, insbesondere im Zusammenhang mit einem Absperrorgan, gesprochen wird, wird damit ein Steuern und/oder Regeln verstanden. Auch wenn dies nicht explizit erwähnt ist, können entsprechende Kontrollelektronik und über Absperrorgane hinausgehende Kontrollvorrichtungen, beispielsweise Durchflussmesser, für das Kontrollieren vorgesehen sein.

Die hierin erwähnten Absperrorgane dienen zumindest dazu, in den Verbindungen den Strom des jeweiligen, darin strömenden Fluids, insbesondere Gases, anzuhalten oder durchzulassen. Auch ein Kontrollieren der Durchflussmenge ist je nach Ausführungstyp des eingesetzten Absperrorgans möglich. Dabei ist es möglich, das Absperrorgan in unterschiedlichster Weise auszuführen, beispielsweise als Ventil, Absperrschieber, Absperrhahn oder Absperrklappe.

Vorteilhaft ist, wenn die beiden Katalysatoren mit unterschiedlichen, sich aufteilenden Teilpfaden der Restgaszuführverbindung gekoppelt sind. So kann der Restgasstrom zu jedem der beiden Katalysatoren kontrolliert werden. Mit anderen Worten kann die Restgasmenge, die jedem der beiden Katalysatoren zugeführt werden, kontrolliert werden. Folglich kann auch die abgegebene Wärme an den hinter dem jeweiligen Katalysator angeordneten Wärmetauscher kontrolliert werden.

Hierzu kann vorteilhafterweise in zumindest einem der beiden Teilpfade ein fünftes und/oder sechstes Absperrorgan angeordnet werden. Besonders vorteilhaft ist in jedem der Teilpfade jeweils ein solches Absperrorgan angeordnet. Beispielsweise kann eine Absperrklappe als Absperrorgan genutzt werden. Dies erlaubt ein einfaches und dennoch präzises Kontrollieren des Restgasstroms zu den Katalysatoren und damit den von ihnen durch katalytische Verbrennung erzeugten Wärmemengen.

Vorteilhaft ist zudem, wenn jeder der beiden Teilpfade jeweils vor einem Katalysatorzuführabschnitt eines der beiden Katalysatoren mit der Anodenabführverbindung fluidtechnisch verbunden ist, um das Restgas und das Anodenabgas zu einem Restgas-Anodenabgas-Gemisch zu vermischen. Folglich wird das Restgas-Anodenabgas-Gemisch in die Katalysatoren eingeleitet und katalytisch verbrannt. Dies optimiert nicht nur die katalytische Verbrennung, sondern ermöglicht es auch, das Restgas mittels des warmen Anodenabgases aus dem Elektrolysezellenstapel für die katalytische Verbrennung vorzuwärmen.

Auch kann vorteilhafterweise vorgesehen werden, dass ein erster Katalysator der beiden Katalysatoren in Strömungsrichtung der Anodenabführverbindung hinter einem zweiten Katalysator der beiden Katalysatoren angeordnet ist. Folglich wird mit dem ersten Katalysator eine erste Katalysatorstufe bereitgestellt und mit dem zweiten Katalysator wird eine zweite Katalysatorstufe bereitgestellt. Insbesondere in Verbindung mit den zuvor erwähnten Teilpfaden kann jede Katalysatorstufe einzeln kontrolliert, beispielsweise zugeschaltet oder abgeschaltet oder in der zugeführten Restgasmenge kontrolliert, werden, wie dies für einen optimalen Betrieb des Elektrolysesystems erforderlich ist. Entsprechend kann auch einer von dem zweiten und dritten Wärmetauscher in Strömungsrichtung in der Anodenabführverbindung hinter beiden Katalysatoren angeordnet sein und ein anderer von dem zweiten und dritten Wärmetauscher kann in Strömungsrichtung in der Anodenabführverbindung nur hinter dem zweiten Katalysator angeordnet sein.

Erfindungsgemäß ist es vorgesehen, dass einer von dem zweiten und dritten Wärmetauscher wärmetechnisch mit der Anodenzuführverbindung gekoppelt ist. Dies erlaubt es, Wärme aus den Katalysator-Abgasen eines oder beider Katalysatoren an die Anodenzuführverbindung abzuführen und so das Anodengas zu erwärmen, welches am Anodenzuführabschnitt ankommt, um die Effizienz der Hochtemperaturelektrolyse zu erhöhen.

Zusätzlich ist es vorgesehen, dass einer von dem zweiten und dritten Wärmetauscher wärmetechnisch mit der Kathodenzuführverbindung gekoppelt ist. Dies erlaubt es, Wärme aus den Katalysator-Abgasen eines oder beider Katalysatoren an die Kathodenzuführverbindung abzuführen und so das Kathodengas zu erwärmen, welches am Kathodenzuführabschnitt ankommt, um die Effizienz der Hochtemperaturelektrolyse zu erhöhen. Bevorzugt wird einer von dem zweiten und dritten Wärmetauscher für die wärmetechnische Kopplung mit der Anodenzuführverbindung und ein anderer für die wärmetechnische Kopplung mit der Kathodenzuführverbindung verwendet.

Außerdem ist vorteilhaft, wenn ein vierter Wärmetauscher in Strömungsrichtung in der Anodenabführverbindung hinter dem zweiten und dritten Wärmetauscher angeordnet ist und wärmetechnisch mit einer ersten Zusatzzuführverbindung gekoppelt ist, welche die Kathodenzuführverbindung oder den Kathodenzuführabschnitt mit einem ersten Zusatzzuführanschluss zum Zuführen von Wasser oder Wasserdampf zum Kathodenzuführabschnitt verbindet. Dadurch kann die nach dem Wärmetausch im zweiten und dritten Wärmetauscher noch enthaltene Restwärme im Katalysator-Abgas in der Anodenabführverbindung genutzt werden, um das am ersten Zusatzzuführanschluss zugeführte Wasser oder den zugeführten Wasserdampf zu erhitzen und dadurch die Effizienz des Elektrolysesystems weiter zu steigern.

Zusätzlich oder alternativ kann vorgesehen sein und ist vorteilhaft, wenn ein fünfter Wärmetauscher in Strömungsrichtung in der Anodenabführverbindung hinter dem zweiten und dritten Wärmetauscher angeordnet ist und wärmetechnisch mit der Anodenzuführverbindung gekoppelt ist. Dadurch kann die nach dem Wärmetausch im zweiten und dritten Wärmetauscher noch enthaltene Restwärme im Abgas in der Anodenabführverbindung genutzt werden, um die in der Anodenzuführverbindung transportierte Luft zu erhitzen und dadurch die Effizienz des Elektrolysesystems weiter zu steigern.

Darüber hinaus ist vorteilhaft, wenn ein erster Wärmetauscher in der Anodenzuführverbindung angeordnet ist und in Strömungsrichtung vor den beiden Katalysatoren wärmetechnisch mit der Anodenabführverbindung gekoppelt ist. Dadurch kann insbesondere in einem ersten Schritt die Wärme der Katalysator-Abgase mit dem Anodenabgas, insbesondere der abgeführten Luft, aus dem Anodenabführabschnitt genutzt werden, um das Anodengas, insbesondere die zugeführte Luft, zu erwärmen. Dies hat neben dem Erwärmen des Anodengases den Vorteil, dass die Anodenabgase des Anodenabschnitts durch die Wärmeübertragung gekühlt werden, wodurch die Selbstzündungstemperatur des Restgas-Anodenabgas-Gemisches unterschritten wird, welches durch Mischung des Restgases und des Anodenabgases in Strömungsrichtung hinter dem ersten Wärmetauscher erzeugt wird. Denn das Anodenabgas ist sehr sauerstoffreich mit ca. 30% Sauerstoff, da im Elektrolysezellenstapel Sauerstoff von dem Kathodenabschnitt zum Anodenabschnitt diffundiert. Die Absenkung unter die Selbstzündungstemperatur ist insofern zielführend, als dass eine hohe thermische Beanspruchung der Komponenten in dem Elektrolysesystem verhindert wird und eine kontrollierte Verbrennung über den anschließend folgenden Katalysator sichergestellt wird.

Dabei ist es vorteilhaft, wenn ein dritter Bypasspfad die Anodenzuführverbindung in Strömungsrichtung vor dem ersten Wärmetauscher mit der Anodenzuführverbindung in Strömungsrichtung hinter dem ersten Wärmetauscher miteinander verbindet, wobei in dem den ersten Wärmetauscher umgehenden dritten Bypasspfad ein drittes Absperrorgan angeordnet ist und/oder in der Anodenzuführverbindung in Strömungsrichtung hinter einer Abzweigung von der Anodenzuführverbindung zum dritten Bypasspfad und vor dem ersten Wärmetauscher ein viertes Absperrorgan angeordnet ist. Dadurch wird es der zugeführten Luft in der Anodenzuführverbindung auf einfache Art und Weise ermöglicht, den ersten Wärmetauscher zu umgehen. Ferner ermöglicht dies eine einfache Kontrolle der Temperatur des Anodengases und des Anodenabgases in der jeweiligen Anodenverbindung.

Dabei kann vorteilhafterweise in dem dritten Bypasspfad eine erste Heizeinrichtung angeordnet werden. Die erste Heizeinrichtung kann insbesondere ein elektrischer Heizer sein. So lässt sich die Temperatur des zugeführte Anodengases noch weiter steigern, um den Elektrolysezellenstapel betriebspunktoptimiert zu betreiben.

Außerdem ist vorteilhafterweise die Anodenabführverbindung in Strömungsrichtung vor zumindest einem der beiden Katalysatoren mittels eines ersten und/oder eines zweiten Bypasspfads mit der Anodenzuführverbindung verbunden. Insbesondere können in Strömungsrichtung vor jedem der beiden Katalysatoren solche Bypasspfade, nämlich ein erster Bypasspfad und ein zweiter Bypasspfad, vorgesehen werden, die mit der Anodenzuführverbindung verbunden sind. So lässt sich insbesondere zusätzlich zu der bereits erfolgenden Mischung vor den Katalysatoren, bei der die sauerstoffreiche Abluft des Anodenabgases aus dem Anodenabführabschnitt mit dem Restgas vermischt wird, zusätzliche, kühle Luft für die katalytische Verbrennung in den Katalysator einbringen und damit auch die Katalysatoren kühlen. Dabei ist vorteilhafterweise in dem Bypasspfad ein Absperrorgan angeordnet. Besonders vorteilhaft sind in dem ersten Bypasspfad ein erstes Absperrorgan und in dem zweiten Bypasspfad ein zweites Absperrorgan angeordnet. Dies ermöglicht das Kontrollieren der Menge der zugeführten zusätzlichen Luft.

Vorgesehen ist es weiter, dass zumindest einer der beiden Katalysatoren als ein Oxidationskatalysator ausgebildet ist. Insbesondere können beide Katalysatoren als Oxidationskatalysatoren ausgebildet sein. Ein Oxidationskatalysator kann eine Oxidation von Schadstoffen wie Kohlenmonoxid und Kohlenwasserstoffen vornehmen, er kann aber keine Reduktion von Stickoxiden vornehmen. Mithilfe eines Oxidationskatalysators lässt sich nicht nur die im Restgas enthaltene Energie in Form von Wärme nutzen, wobei auch der noch im Abgas vorhandene Wasserstoff umgewandelt wird.

Schließlich ist es vorteilhaft, wenn das Elektrolysesystem ferner einen ersten Zusatzzuführanschluss zum Bereitstellen von erhitztem Wasserdampf aufweist, welcher bei der Kühlung in der Synthese zur Herstellung von synthetischen Kohlenwasserstoffen aus dem von dem Elektrolysezellenstapel erzeugten Synthesegases erhitzt wird. Entsprechend wird für eine Effizienzoptimierung des Elektrolysesystems nicht nur das Restgas aus dem Syntheseprozess, sondern auch beim Kühlen während des Syntheseprozesses anfallender erhitzter Wasserdampf nutzbar gemacht, wodurch eine doppelte und synergetische Effizienzoptimierung der Hochtemperaturelektrolyse erzielt wird.

Ebenfalls Gegenstand der vorliegenden Erfindung ist eine Hochtemperatur-Co-Elektrolyseanlage mit einem erfindungsgemäßen Hochtemperatur-Co-Elektrolysesystem und einem Synthesesystem mit einer Syntheseanlage. Dabei ist der Kathodenabführanschluss mittels einer Synthesegaszuführverbindung fluidtechnisch mit der Syntheseanlage gekoppelt. Auch ist die Syntheseanlage zur Synthese, der aus dem von dem Elektrolysezellenstapel erzeugten und mittels der Synthesegaszuführverbindung zugeführten Synthesegas hergestellten synthetischen Kohlenwasserstoffe eingerichtet. Schließlich ist die Syntheseanlage mittels einer Restgasabführverbindung zum Bereitstellen von Restgas fluidtechnisch mit dem Restgaszuführanschluss gekoppelt.

Die Hochtemperatur-Co-Elektrolyseanlage ist im Rahmen der Erfindung insbesondere als Gesamtanlage zu verstehen, welche bevorzugt als sogenannte "Power-to-Liquid-Anlage" oder PtL-Anlage ausgebildet ist.

Damit bringt eine erfindungsgemäße Hochtemperatur-Co-Elektrolyseanlage die gleichen Vorteile mit sich, wie sie ausführlich mit Bezug auf das erfindungsgemäße Hochtemperatur-Co-Elektrolysesystem erläutert worden sind.

Ebenfalls Gegenstand der vorliegenden Erfindung ist ein Verfahren zum Erzeugen von Synthesegas mittels eines Hochtemperatur-Co-Elektrolysesystems, insbesondere des erfindungsgemäßen Hochtemperatur-Co-Elektrolysesystems und ferner ganz besonders mittels der erfindungsgemäßen Hochtemperatur-Co-Elektrolyseanlage, aufweisend die Schritte:
- Zuführen von aus einem Syntheseprozess, bei dem Synthesegas in Kohlenwasserstoffe umgesetzt wird, abgeschiedenen Restgases zu zwei Katalysatoren eines Hochtemperatur-Co-Elektrolysesystems, wobei zumindest einer der beiden Katalysatoren als ein Oxidationskatalysator ausgebildet ist,
- katalytisches Verbrennen des Restgases mittels der beiden Katalysatoren des Hochtemperatur-Co-Elektrolysesystems,
- Übertragen von Wärme eines Katalysator-Abgasstroms der katalytischen Verbrennung der beiden Katalysatoren mittels zweier Wärmetauscher an ein Anodengas und ein Kathodengas,
- Zuführen des Anodengases, des Kathodengases und von elektrischem Strom zu einem Elektrolysezellenstapel des Hochtemperatur-Co-Elektrolysesystems, und
- Erzeugen des Synthesegases mittels des Elektrolysezellenstapels aus dem zugeführten Anodengas, Kathodengas und elektrischem Strom.

Damit bringt ein erfindungsgemäßes Verfahren die gleichen Vorteile mit sich, wie sie ausführlich mit Bezug auf das erfindungsgemäße Hochtemperatur-Co-Elektrolysesystem erläutert worden sind.

Insbesondere kann das erfindungsgemäße Hochtemperatur-Co-Elektrolysesystem und/oder die erfindungsgemäße Hochtemperatur-Co-Elektrolyseanlage zum Ausführen des erfindungsgemäßen Verfahrens eingerichtet bzw. ausgebildet sein.

Unter dem Anodengas wird das zum Anodenabschnitt zugeführte Gas, also insbesondere Luft oder Sauerstoff, verstanden. Dies schließt das Anodenabgas, also das vom Anodenabschnitt abgeführte Abgas, insbesondere Luft und/oder Sauerstoff, aus. Unter dem Kathodengas wird das zum Kathodenabschnitt zugeführte Gas, insbesondere Kohlenstoffdioxid, Wasserdampf und/oder ein Schutzgas, verstanden. Dies schließt das Kathodenabgas, also das vom Kathodenabschnitt abgeführte synthetische Gas, aus.

Es hat sich als vorteilhaft herausgestellt, wenn der Restgasstrom in zwei Teilpfade aufgeteilt und mittels je eines der beiden Teilpfade je einem der beiden Katalysatoren Restgas zugeführt wird. Dies erlaubt das bereits oben angesprochene Kontrollieren von Restgasströmen zu den Katalysatoren und damit der Wärmemengenabgaben zwischen der Anoden- und Kathodenzuführverbindung. Ganz besonders kann dabei vorteilhafterweise im Wesentlichen dieselbe Wärmemenge an beiden Wärmetauschern und damit an der Anodenzuführverbindung und der Kathodenzuführverbindung erfolgen, indem der Restgasstrom in den beiden Teilpfaden entsprechend kontrolliert wird.

Dazu ist es vorteilhaft, wenn der Katalysator-Abgasstrom in den beiden Teilpfäden jeweils mittels eines Absperrorgans in jedem der beiden Teilpfade hinter dem jeweiligen Wärmetauscher des jeweiligen Teilpfades kontrolliert wird.

Auch ist vorteilhaft, wenn die Katalysator-Abgasstrom eines der beiden Katalysatoren mittels der Anodenabführverbindung dem anderen der beiden Katalysatoren zugeführt wird. Dies erlaubt es, den Katalysator-Abgasstrom des einen Katalysators hinsichtlich seiner Wärmemenge für die katalytische Verbrennung des anderen Katalysators zu nutzen und so die Effizienz hochzuhalten.

Schließlich ist es bevorzugt, dass die Katalysator-Abgasströme für eine weitere Wärmeübertragung durch einen vierten Wärmetauscher zum Erwärmen von dem Elektrolysesystem zugeführten Wasser oder Wasserdampfs und/oder durch einen fünften Wärmetauscher zum Erwärmen des Anodengases strömen. Dies ermöglicht es, eine noch verbleibende Restwärme in dem Katalysator-Abgasströmen der Katalysatoren zu nutzen, um den Wirkungsgrad des Elektrolysesystems noch weiter zu steigern.

Vorteilhaft ist ferner, wenn das Restgas in Strömungsrichtung vor den Katalysatoren mit Anodenabgas des Elektrolysezellenstapels zu einem Restgas-Anodenabgas-Gemisch vermischt wird. Die sauerstoffreichte Luft des Anodenabgases kann so die Temperatur des Restgas-Anodenabgas-Gemisches anheben und zur kontrollierten katalytischen Verbrennung genutzt werden.

Dabei ist vorteilhaft, wenn das Anodenabgas vor dem Vermischen mit dem Restgas mittels eines ersten Wärmetauschers Wärme an das zugeführte Anodengas überträgt. Dadurch kann einerseits das zugeführte Anodengas mit der Luft erwärmt werden und andererseits das Anodenabgas mit der Luft abgekühlt werden, insbesondere unter die Selbstzündungstemperatur des Restgas-Anodenabgas-Gemisches.

Ferner ist vorteilhaft, wenn dem Restgas-Anodenabgas-Gemisch Anodengas beigemischt wird. Dies kann durch die zuvor erwähnten Bypasspfade, insbesondere den ersten und zweiten Bypasspfad, erfolgen. So kann die Luftmenge durch Anodengas enthaltend Frischluft in dem Restgas-Anodenabgas-Gemisch weiter erhöht werden.

Als vorteilhaft hat sich herausgestellt, wenn das Restgas-Anodenabgas-Gemisch eine Temperatur im Bereich von 300 bis 550 °C, insbesondere im Bereich von 400 bis 500 °C, aufweist. Dies bezieht sich auf die Temperatur an Katalysatorzuführabschnitten der Katalysatoren. In diesem Temperaturbereich hat sich die höchste Effizienzsteigerung beim Erzeugen des Synthesegases beobachten lassen.

Vorteilhaft ist, wenn die Katalysator-Abgase der katalytischen Verbrennung eine Temperatur im Bereich von 800 bis 1.000 °C, insbesondere im Bereich von 850 °C bis 950 °C, aufweisen. Dies bezieht sich auf die Temperatur an Katalysatorabführabschnitten der Katalysatoren. In diesem Temperaturbereich hat sich die höchste Effizienzsteigerung beim Erzeugen des Synthesegases beobachten lassen.

Vorteilhafterweise wird das erzeugte Synthesegas dem Syntheseprozess zugeführt, aus dem das Restgas abgeschieden und den beiden Katalysatoren zugeführt wird.

Vorteilhaft ist außerdem, wenn der Syntheseprozess ein Fischer-Tropsch-Prozess ist. Die Kopplung von Hochtemperatur-Co-Elektrolyse und Fischer-Tropsch-Synthese (kurz FTS) hat sich als besonders vielversprechende Variante für die Herstellung unterschiedlicher Kohlenwasserstoffe gezeigt. Bei der FTS wird aus der Hochtemperatur-Co-Elektrolyse entstandenes Synthesegas bei vergleichsweise moderateren Temperaturen, insbesondere im Temperaturbereich von 200 bis 300 °C, und erhöhten Drücken, insbesondere im Druckbereich von 10 bis 30 bar, mithilfe eines Katalysators, insbesondere Co- oder Fe-basiert, zu Kohlenwasserstoffmolekülen mit verschiedenen Kettenlängen umgesetzt. Der FTS-Prozess ist stark exotherm. Um die Temperatur in dem angegebenen Temperaturbereich halten zu können, kann über die Länge eines Reaktors in der Syntheseanlage gekühlt werden. Die Kühlung kann dabei mit Wasserverdampfung beim angegebenen Druckniveau erfolgen. Der Wasserdampf kann im Anschluss für weitere Prozessschritte sowie, wie zuvor erwähnt, für die Hochtemperaturelektrolyse selbst durch Zuführen des Wasserdampfes zum Kathodengas genutzt werden. Die bei FTS entstehende Kohlenwasserstoff-Kettenlängenverteilung wird über eine Kettenwachstumswahrscheinlichkeit beschrieben (bei hoher Kettenwachstumswahrscheinlichkeit große Moleküle und damit Verschiebung in Richtung Flüssigkraftstoffe). Das Synthesegas wird dabei jedoch nicht zur Gänze umgesetzt. Außerdem entstehen je nach Kettenwachstumswahrscheinlichkeit kurzkettige Moleküle, die nicht als Flüssigkraftstoff genutzt werden können. Das nicht umgesetzte Synthesegas und die entstehenden kurzkettigen Kohlenwasserstoffe können in der Produktaufbereitung als das Restgas abgeschieden werden. Während das Restgas zum Teil in die FTS rezirkuliert werden kann, muss teilweise ausgetragen werden. Insbesondere der ausgetragene Teil des Restgases wird in dem erfindungsgemäßen Verfahren genutzt.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschreiben sind. Es zeigen schematisch:
- Fig. 1: eine erste Ausführungsform einer erfindungsgemäßen Hochtemperatur-Co-Elektrolyseanlage,
- Fig. 2: eine zweite Ausführungsform einer erfindungsgemäßen Hochtemperatur-Co-Elektrolyseanlage,
- Fig. 3: eine dritte Ausführungsform einer erfindungsgemäßen Hochtemperatur-Co-Elektrolyseanlage, und
- Fig. 4: eine Ausführungsform eines erfindungsgemäßen Verfahrens.

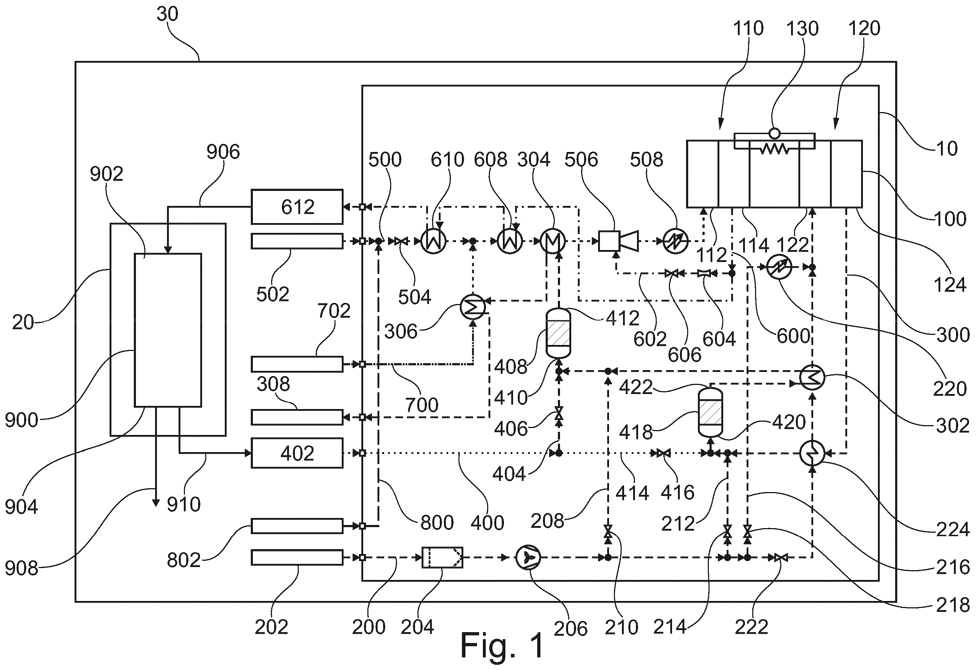

Identische oder funktionsgleiche Elemente sind in den Figuren 1 bis 4 jeweils mit demselben Bezugszeichen bezeichnet.

Figur 1 zeigt schematisch eine Hochtemperatur-Co-Elektrolyseanlage 30 umfassend ein Hochtemperatur-Co-Elektrolysesystem 10 mit einem Elektrolysezellenstapel 100 sowie ein Synthesesystem 20 mit einer Syntheseanlage 900. Das Hochtemperatur-Co-Elektrolysesystem 10 und das Synthesesystem 20 sind fluidtechnisch miteinander gekoppelt, wie später näher erläutert wird.

Beispielhaft ist in der Fig. 1 nur ein Elektrolysezellenstapel 100 gezeigt. Gleichwohl ist es möglich, mehrere Elektrolysezellenstapel 100 vorzusehen. Der Elektrolysezellenstapel 100 weist einen Kathodenabschnitt 110 mit einem Kathodenzuführabschnitt 112 und einem Kathodenabführabschnitt 114 auf. Ferner weist der Elektrolysezellenstapel 100 einen Anodenabschnitt 120 mit einem Anodenzuführabschnitt 122 und einem Anodenabführabschnitt 124 auf. An dem Elektrolysezellenstapel 100 ist eine Stromversorgungsquelle 130 angeschlossen, die Strom aus erneuerbaren Energien bereitstellt. Der Elektrolysezellenstapel 100 ist vorliegend als ein Festoxid-Elektrolysezellenstapel ausgebildet und wird im Elektrolysemodus zur Hochtemperatur-Co-Elektrolyse verwendet.

Mittels eines Anodengasanschlusses 202 wird dabei Anodengas in Form von Frischluft in dem Hochtemperatur-Co-Elektrolysesystem 10 bereitgestellt. Das Anodengas wird über eine Anodenzuführverbindung 200, die mit dem Anodengasanschluss 202 und dem Anodenzuführabschnitt 122 fluidtechnisch gekoppelt ist, an dem Elektrolysezellenstapel 100 zur Elektrolyse bereitgestellt. In der Anodenzuführverbindung 200 sind dabei eine Filtereinrichtung 204, insbesondere in Form eines Luftfilters, zur Luftfilterung sowie ein Gebläse 206 für den Transport des Anodengases angeordnet.

In der Anodenzuführverbindung 200 ist in Strömungsrichtung des Anodengases von dem Anodengasanschluss 202 zum Anodenzuführabschnitt 122 hinter der Filtereinrichtung 204 und dem Gebläse 206 ein erster Wärmetauscher 224 angeordnet. Der erste Wärmetauscher 224 wird zum Wärmeaustausch mit einem warmen Anodenabgas, insbesondere in Form von vom Anodenabschnitt 120 abgeführter Abluft, aus dem Elektrolysezellenstapel 100 genutzt. Dazu ist der erste Wärmetauscher 224 mit einer Anodenabführverbindung 300 wärmetechnisch vor einem zweiten Katalysator 418 in Form eines Oxidationskatalysators gekoppelt. Die Anodenabführverbindung 300 verbindet den Anodenabführabschnitt 124 fluidtechnisch mit einem Anodenabführanschluss 308.

Der zweite Katalysator 418 ist in der Anodenabführverbindung 300 in Strömungsrichtung des Anodenabgases hinter dem ersten Wärmetauscher 224 angeordnet und mittels einer Restgaszuführverbindung 400 fluidtechnisch mit einem Restgasanschluss 402 gekoppelt. Der Restgasanschluss 402 bezieht Restgas aus der Syntheseanlage 900, wie später näher beschrieben wird. Das an einen zweiten Katalysatorzuführabschnitt 420 des zweiten Katalysators 418 bereitgestellte Restgas, welches an einem Knotenpunkt der Restgaszuführverbindung 400 mit der Anodenabführverbindung 300 mit dem Anodenabgas in der Anodenabführverbindung 300 zu einem Restgas-Anodenabgas-Gemisch vermischt wird, wird von dem zweiten Katalysator 418 katalytisch verbrannt. Aus dem zweiten Katalysatorabführabschnitt 422 treten heiße Katalysator-Abgase mit einer Temperatur im Bereich von 800 bis 1000 °C, insbesondere um ca. 950 °C, aus.

Ein zweiter Bypasspfad 212 mit darin angeordnetem zweiten Absperrorgan 214 verbindet die Anodenzuführverbindung 200 in Strömungsrichtung des Anodengases vor dem ersten Wärmetauscher 224 mit der Anodenabführverbindung 300 vor dem zweiten Katalysatorzuführabschnitt 420 und erlaubt es somit, den Luftanteil des Restgas-Anodenabgas-Gemisches vor dem Eintritt in den zweiten Katalysator 418 weiter zu erhöhen und das Restgas-Anodenabgas-Gemisch weiter zu kühlen.

Hierneben ist ein dritter Bypasspfad 216 mit einem dritten Absperrorgan 218 vorgesehen, der die Anodenzuführverbindung 200 in Strömungsrichtung des Anodengases vor dem ersten Wärmetauscher 224 mit der Anodenzuführverbindung 200 in Strömungsrichtung des Anodengases hinter dem ersten Wärmetauscher 224 verbindet und es dadurch ermöglicht, die Temperatur des Restgas-Anodenabgas-Gemisches vor dem zweiten Katalysator 418 mittels Regulierung der den ersten Wärmetauscher 224 durchströmenden Anodengasmenge zu kontrollieren. Ferner ist in Strömungsrichtung vor dem zweiten Wärmetauscher 302 und hinter dem dritten Bypasspfad 216 ein viertes Absperrorgan 222 angeordnet.

Die heißen Katalysator-Abgase des zweiten Katalysators 418 strömen aus dem zweiten Katalysatorabführabschnitt 422 in der Anodenabführverbindung 300 durch einen zweiten Wärmetauscher 302, der wärmetechnisch mit der Anodenzuführverbindung 200 gekoppelt ist. Dies erlaubt es, die Wärme des Katalysator-Abgases des zweiten Katalysators 418 an das Anodengas vor dem Anodenzuführabschnitt 122 abzugeben.

Neben dem zweiten Katalysator 418 umfasst das Hochtemperatur-Co-Elektrolysesystem 10 auch einen weiteren, hierin als ersten bezeichneten Katalysator 408. Der erste Katalysator 408 ist in der Anodenabführverbindung 300 in Strömungsrichtung hinter dem zweiten Katalysator 418 angeordnet, also hinter dem zweiten Wärmetauscher 302 und im Katalysator-Abgasstrom des zweiten Katalysators 418. Dazu teilt sich die Restgaszuführverbindung 400 in zwei einzelne Teilpfade 404, 414, nämlich einen ersten Teilpfad 404 und einen zweiten Teilpfad 414 auf. In dem ersten Teilpfad 404 ist ein fünftes Absperrorgan 406 angeordnet. In dem zweiten Teilpfad 414 ist ein sechstes Absperrorgan 416 angeordnet. Insoweit ist mittels der Absperrorgane 406, 416 die Restgasmenge kontrollierbar, die dem jeweiligen der beiden Katalysatoren 408, 418 zugeführt wird und damit die Wärmemenge, die durch die katalytische Verbrennung mit den Katalysator-Abgasen von diesen abgegeben wird. Dabei erfolgt, wie oben bereits erläutert, vor dem zweiten Katalysatorzuführabschnitt 420 des zweiten Katalysators 418 ein Vermischen von Restgas und Anodenabgas am besagten Knotenpunkt. Auch vor einem ersten Katalysatorzuführabschnitt 410 des ersten Katalysators erfolgt an einem Knotenpunkt, in dem der Anodenabführabschnitt 300 und der erste Teilpfad 404 aufeinander treffen, eine entsprechende Vermischung von Restgas und Katalysator-Abgasen, die hierin weiterhin auch als Anodenabgas bezeichnet werden, weil sie in der Anodenabführverbindung 300 strömen, zu einem hierin ebenfalls als Restgas-Anodenabgas-Gemisch bezeichneten Gemisch.

In Strömungsrichtung hinter dem ersten Katalysator 408 und seinem ersten Katalysatorabführabschnitt 412 befindet sich in der Anodenabführverbindung 300 ein dritter Wärmetauscher 304. Der dritte Wärmetauscher 304 ist wärmetechnisch mit einer Kathodenzuführverbindung 500 gekoppelt. Die Kathodenzuführverbindung 500 verbindet einen Kathodenzuführanschluss 502 fluidtechnisch mit dem Kathodenzuführabschnitt 112. In der Kathodenzuführverbindung 500 wird Kathodengas, insbesondere Kohlenstoffdioxid, aus dem Kathodenzuführanschluss 502 zum Kathodenzuführabschnitt 112 zugeführt. In Strömungsrichtung des Anodengases vor dem Kathodenabschnitt 110 sind in der Kathodenzuführverbindung 500 ein siebtes Absperrorgan 504 und ein Ejektor 506 angeordnet. Ferner ist in Strömungsrichtung des Anodengases hinter dem Ejektor 506 eine zweite Heizeinrichtung 508, vorliegend in Form eines elektrischen Heizers, angeordnet. Durch den dritten Wärmetauscher 304 lässt sich das Kathodengas mit der Wärme aus dem Katalysator-Abgas eines oder beider Katalysatoren 408, 418 erwärmen.

Ein erster Bypasspfad 208 mit darin angeordnetem ersten Absperrorgan 210 verbindet die Anodenzuführverbindung 200 in Strömungsrichtung des Anodengases vor dem ersten Wärmetauscher 224, und insbesondere vor der Abzweigung zum zweiten Bypasspfad 212, mit der Anodenabführverbindung 300 vor dem ersten Katalysatorzuführabschnitt 410 und erlaubt es somit, den Luftanteil des Restgas-Anodenabgas-Gemisches vor dem Eintritt in den ersten Katalysator 408 zu erhöhen und das Restgas-Anodenabgas-Gemisch zu kühlen.

Mit der vorstehend erläuterten Anordnung von Katalysatoren 408, 418 in dem Hochtemperatur-Co-Elektrolysesystem 10 ist es somit möglich, nur einen oder beide Katalysatoren 408, 418 gemeinsam zu betreiben, wobei letzteres bevorzugt ist. So kann die sauerstoffreiche Abluft im Anodenabgas mit einer ersten, mittels des sechsten Absperrorgans 416 kontrollierbaren Menge des Restgases gemischt zur kontrollierten katalytischen Verbrennung über den zweiten Katalysator 418, der insoweit als erste Oxidationskatalysator-Stufe fungiert, zur Temperaturbereitstellung am zweiten Wärmetauscher 302, der als Luftüberhitzer für die Luft im Anodengas fungiert, geführt werden. Wiederum kann das weiterhin sauerstoffreiche Katalysator-Abgas des zweiten Katalysators 418 mit einer zweiten, mittels des fünften Absperrorgans 406 kontrollierbaren Menge des Restgases gemischt zur kontrollierten katalytischen Verbrennung über den ersten Katalysator 408, der insoweit als zweite Oxidationskatalysator-Stufe fungiert, zur Temperaturbereitstellung am dritten Wärmetauscher 304, der als Reaktantüberhitzer für das Kathodengas fungiert, geführt werden.

Durch die beiden Oxidationskatalysator-Stufen kann bei niedrigeren Oxidationskatalysator-Zieltemperaturen der gleiche Wärmetausch gewährleistet werden (meint den gesamte Massenstrom durch beide Wärmetauscher 302, 304 und die gleiche Enthalpiemenge bei niedrigeren Temperaturen), oder vice versa, wie etwa bei einem einstufigen System mit paralleler Anordnung der beiden Wärmetauscher 302, 304. Außerdem ist ein Vorteil, dass höhere Luft- und Reaktant-Temperaturen bei gleicher Oxidationskatalysator-Zieltemperatur erreicht werden können.

Die vorliegende Verschaltung von Katalysatoren 408, 418 in dem Hochtemperatur-Co-Elektrolysesystem 10 kann alternativ zu der in Fig. 1 gezeigten Anordnung auch dergestalt sein, dass der dritte Wärmetauscher 304 im Katalysator-Abgasstrom des zweiten Katalysators 418 und der zweite Wärmetauscher 302 im Katalysator-Abgasstrom des ersten Katalysators 408 angeordnet ist. Insoweit wird noch einmal darauf hingewiesen, dass die Bezeichnung der Komponenten oder Elemente gleicher Art oder gleichen Typs hier lediglich der Unterscheidung dieser voneinander dienen und nicht etwa einer technisch notwendigen Reihenfolge oder dergleichen folgen.

In Strömungsrichtung des Katalysator-Abgases hinter dem zweiten Wärmetauscher 302 befindet sich in der Ausführungsform der Fig. 1 in der Anodenabführverbindung 300 ein vierter Wärmetauscher 306. Der vierte Wärmetauscher 306 ist wärmetechnisch mit einer ersten Zusatzzuführverbindung 700 gekoppelt, die einen ersten Zusatzzuführanschluss 702 mit der Kathodenzuführverbindung 500 fluidtechnisch verbindet. Von dem ersten Zusatzzuführanschluss 702 wird für die Hochtemperatur-Co-Elektrolyse Wasser oder Wasserdampf bereitgestellt, welches durch den vierten Wärmetauscher 306 erwärmt wird und zur Kathodenzuführverbindung 500 strömt.

Mittels einer Kathodenabführverbindung 600, die fluidtechnisch den Kathodenabführabschnitt 114 mit einem Kathodenabführanschluss 612 verbindet, wird Kathodenabgas in Form des durch die Hochtemperatur-Co-Elektrolyse erzeugten Synthesegases, aufweisend Wasserstoff und Kohlenstoffmonoxid, zum Synthesesystem 20 abgeführt. In der Kathodenabführverbindung 600 sind dabei beispielhaft zwei Wärmetauscher 608, 610, nämlich ein sechster Wärmetauscher 608 und ein siebter Wärmetauscher 610 wärmetechnisch angeordnet und wärmetechnisch mit der Kathodenzuführverbindung 500 gekoppelt, um Wärme von dem Synthesegas auf das Kathodengas zu übertragen und so die Effizienz des Hochtemperatur-Co-Elektrolysesystems 10 zu erhöhen.

Ein vierter Bypasspfad 602 führt von dem Kathodenabführabschnitt 600 zum Ejektor 506. In dem vierten Bypasspfad 602 sind eine Düse 604, insbesondere eine Venturidüse, und ein achtes Absperrorgan 606, insbesondere ein Ventil, angeordnet.

Eine zweite Zusatzzuführverbindung 800 verbindet einen zweiten Zusatzzuführanschluss 802 zum Zuführen eines Schutzgases fluidtechnisch mit der Kathodenzuführverbindung 500 in Strömungsrichtung der Kathodenzuführverbindung 500 vor dem siebten Absperrorgan 504.

Der gemäß der vorstehend beschriebenen Art und Weise mit Anodengas, umfassend Luft, und Kathodengas, umfassend Kohlenstoffdioxid, Wasserdampf und Schutzgas, versorgte Elektrolysezellenstapel 100 erzeugt im Elektrolysemodus durch Hochtemperatur-Co-Elektrolyse das Kathodenabgas in Form von Synthesegas, umfassend Wasserstoff und Kohlenstoffmonoxid, und das Anodenabgas, umfassend Abluft. Das Anodenabgas wird durch die beiden Katalysatoren 408, 418 zusammen mit Restgas katalytisch verbrannt, sodass vom Hochtemperatur-Co-Elektrolysesystem 10 an dem Anodenabführanschluss 308 Katalysator-Abgase abgeschieden werden.

Das Synthesegas wird durch eine Synthesegaszuführverbindung 906, die einen Synthesezuführabschnitt 902 der Syntheseanlage 900 fluidtechnisch mit dem Kathodenabführanschluss 612 verbindet, an der Syntheseanlage 900 des Synthesesystems 20 bereitgestellt. In einem dortigen, nicht explizit gezeigten Reaktor durchläuft es einen Syntheseprozess, insbesondere einen Fischer-Tropsch-Syntheseprozess, und wird zu synthetischen Kohlenwasserstoffen umgesetzt. Die Kohlenwasserstoffe werden über eine mit einem Syntheseabführabschnitt 904 fluidtechnisch verbundene Kohlenwasserstoffabführverbindung 908 abgeführt. Es verbleiben jedoch nicht beim Syntheseprozess umgesetztes Synthesegas sowie kurzkettige Kohlenwasserstoffe, welche teilweise dem Syntheseprozess zurück zugeführt werden können und teilweise als Restgase mittels einer Restgasabführverbindung 910 an den Restgaszuführanschluss 402 abgeführt werden können, die insoweit fluidtechnisch miteinander gekoppelt sind.

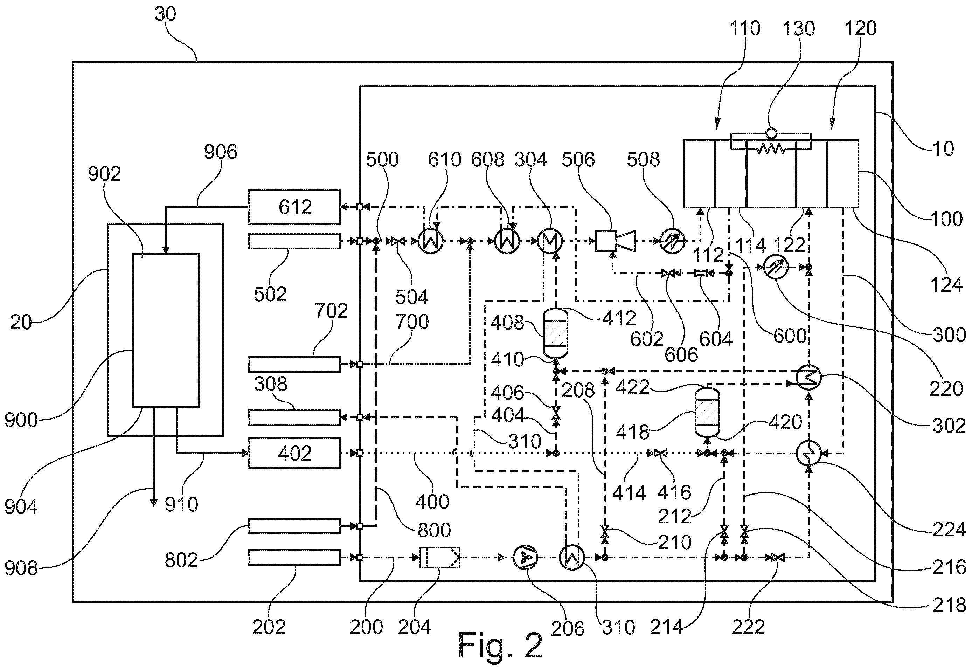

Figur 2 zeigt eine Abwandlung der Ausführungsform der Elektrolyseanlage 30 der Fig. 1. Und zwar wurde in der Fig. 2 auf den vierten Wärmetauscher 306 verzichtet. Stattdessen wurde ein fünfter Wärmetauscher 310 in der Anodenabführverbindung 300 in Strömungsrichtung hinter den beiden Wärmetauschern 302, 304 eingesetzt, der wärmetechnisch mit der Anodenzuführverbindung 200, insbesondere in Strömungsrichtung des Anodengases hinter dem Gebläse 206 und vor dem ersten Wärmetauscher 224, gekoppelt ist. Dies erlaubt es, die Restwärme in dem Anodenabgas bzw. dem Katalysator-Abgas alternativ für das Anodengas bereitzustellen. Gleichwohl ist natürlich auch möglich, sowohl den vierten Wärmetauscher 306 als auch den fünften Wärmetauscher 310 vorzusehen, entweder in Reihenschaltung oder in Parallelschaltung mit entsprechenden Absperrorganen und Bypasspfaden.

Darüber hinaus ist eine beliebige Konfiguration der gezeigten Wärmetauscher 224, 302, 304, 306, 310, 608, 610 möglich, was bedeutet, dass diese Wärmetauscher jeweils alleine oder in beliebiger Auswahl daraus in dem Hochtemperatur-Co-Elektrolysesystem 10 eingesetzt werden können, sodass es nicht notwendig ist, das Hochtemperatur-Co-Elektrolysesystem 10 mit allen Wärmetauschern 224, 302, 304, 306, 310, 608, 610 auszustatten.

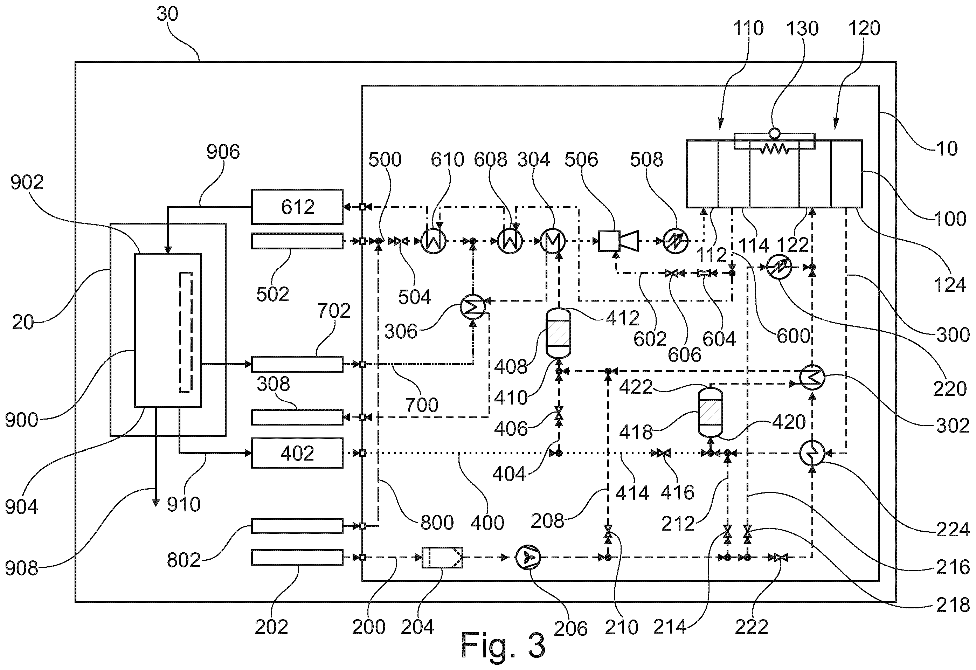

Figur 3 zeigt eine Variation der Elektrolyseanlage 30 der Ausführungsform der Fig. 1, bei der Änderungen in dem Synthesesystem 20 vorgesehen sind. Dabei ist mit Strichlinien eine Kühleinrichtung in der Syntheseanlage 900 gezeigt, die insbesondere einen entsprechenden Reaktor in der Syntheseanlage 900 kühlt. Dabei wird Wasserdampf eingesetzt, um die stark exotherm ablaufende Reaktion des Syntheseprozesses zu kühlen. Der so erhitzte Wasserdampf wird vorteilhafterweise dem ersten Zusatzzuführanschluss 702 mittels einer entsprechenden, fluidtechnisch mit dem ersten Zusatzzuführanschluss 702 verbundenen dritten Zusatzzuführverbindung bereitgestellt.

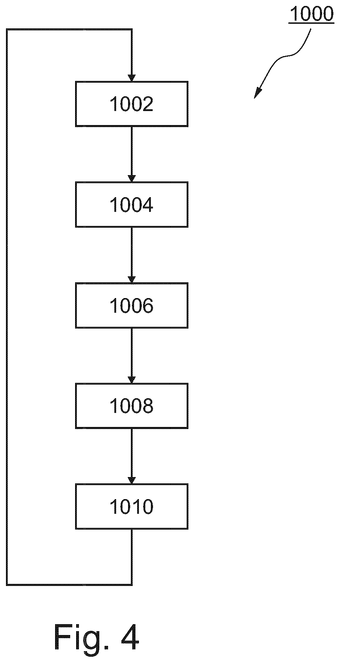

Figur 4 zeigt das bereits in Bezug auf die Fig. 1 bis 3 anhand der Hochtemperatur-Co-Elektrolyseanlage 30 erläuterte Verfahren 1000 zum Erzeugen von Synthesegas mittels des Hochtemperatur-Co-Elektrolysesystems 10. Das Verfahren 1000 ist dabei rein schematisch anhand seiner Verfahrensschritte 1002, 1004, 1006, 1008, 1010 gezeigt, wobei weitere, nicht explizit gezeigte Verfahrensschritte hinzukommen können.

In einem ersten Verfahrensschritt 1002 des Verfahrens 1000 wird aus dem in der Syntheseanlage 900 ablaufenden Syntheseprozess, bei dem das Synthesegas aus dem Kathodenabführanschluss 612 in Kohlenwasserstoffe umgesetzt wird, Restgas abgeschieden. Das Restgas wird mittels der Restgasabführverbindung 910 an dem Restgaszuführanschluss 402 bereitgestellt und so den beiden Katalysator 408, 418 mittels der Teilpfade 404, 414 der Restgaszuführverbindung 400 des Hochtemperatur-Co-Elektrolysesystems 10 bereitgestellt.

In dem zweiten Verfahrensschritt 1004 des Verfahrens 1000 erfolgt ein katalytisches Verbrennen des Restgases mittels der beiden Katalysatoren 408, 418. Aus deren Katalysatorabführabschnitten 412, 422 treten entsprechende Katalysator-Abgase aus. Die Katalysator-Abgase können eine Temperatur im Bereich von 800 bis 1.000 °C aufweisen. Das Restgas vor dem zweiten Katalysator 418 kann, wie in den Fig. 1 bis 3 ersichtlich ist, zuvor mit dem Anodenabgas, also der Abluft aus dem Elektrolysezellenstapel 100, und optional mittels des zweiten Bypasspfades 212 auch mit dem Anodengas, also Frischluft, vermischt werden, sodass in den zweiten Katalysatorzuführabschnitt 420 ein Restgas-Anodenabgas-Gemisch eintritt. Auch das Restgas kann vor dem ersten Katalysator 408 kann, wie in den Fig. 1 bis 3 ersichtlich ist, zuvor mit dem Anodenabgas, also dem sauerstoffreichen Katalysator-Abgas aus dem zweiten Katalysator 418, und optional mittels des ersten Bypasspfades 208 auch mit dem Anodengas, also Frischluft, vermischt werden, sodass in den ersten Katalysatorzuführabschnitt 410 ein Restgas-Anodenabgas-Gemisch eintritt. Das Restgas-Anodenabgas-Gemisch kann jeweils eine Temperatur im Bereich von 300 bis 550 °C aufweisen.

In dem dritten Verfahrensschritt 1006 des Verfahrens 1000 erfolgt ein Übertragen von Wärme der Katalysator-Abgasströme der beiden Katalysatoren 408, 418 der katalytischen Verbrennung zumindest mittels der Wärmetauscher 302, 304 an das Anodengas in der Anodenzuführverbindung 200 und das Kathodengas in der Kathodenzuführverbindung 500, und vorteilhafterweise auch mittels des vierten Wärmetauschers 306 und/oder des fünften Wärmetauschers 310.

Die derart erwärmten Anodengase und Kathodengase werden in einem vierten Verfahrensschritt 1008 des Verfahrens 1000 unter Zuführung von elektrischem Strom dem Elektrolysezellenstapel 100 des Hochtemperatur-Co-Elektrolysesystems 10 zugeführt. Schließlich kann in dem fünften Verfahrensschritt 1010 das Erzeugen des Synthesegases mittels des Elektrolysezellenstapels 100 aus dem zugeführten Anodengas, Kathodengas und elektrischem Strom erfolgen.

Die Verfahrensschritte 1002 bis 1010 des Verfahrens 1000 werden dabei kontinuierlich ausgeführt, wie durch den Pfeil von Verfahrensschritt 1010 auf Verfahrensschritt 1002 angedeutet ist.

Die voranstehenden Erläuterungen der Ausführungsformen beschreiben die vorliegende Erfindung ausschließlich im Rahmen von Beispielen.

### Bezugszeichenliste

- 10: Hochtemperatur-Co-Elektrolysesystem
- 20: Synthesesystem
- 30: Hochtemperatur-Co-Elektrolyseanlage
- 100: Elektrolysezellenstapel
- 110: Kathodenabschnitt
- 112: Kathodenzuführabschnitt
- 114: Kathodenabführabschnitt
- 120: Anodenabschnitt
- 122: Anodenzuführabschnitt
- 124: Anodenabführabschnitt
- 130: Stromversorgungsquelle
- 200: Anodenzuführverbindung
- 202: Anodenzuführanschluss
- 204: Filtereinrichtung
- 206: Gebläse
- 208: erster Bypasspfad
- 210: erstes Absperrorgan
- 212: zweiter Bypasspfad
- 214: zweites Absperrorgan
- 216: dritter Bypasspfad
- 218: drittes Absperrorgan
- 220: erste Heizeinrichtung
- 222: viertes Absperrorgan
- 224: erster Wärmetauscher
- 300: Anodenabführverbindung
- 302: zweiter Wärmetauscher
- 304: dritter Wärmetauscher
- 306: vierter Wärmetauscher
- 308: Anodenabführanschluss
- 310: fünfter Wärmetauscher
- 400: Restgaszuführverbindung
- 402: Restgaszuführanschluss
- 404: erster Teilpfad
- 406: fünftes Absperrorgan
- 408: erster Katalysator
- 410: erster Katalysatorzuführabschnitt
- 412: zweiter Katalysatorzuführabschnitt
- 414: zweiter Teilpfad
- 416: sechstes Absperrorgan
- 418: zweiter Katalysator
- 420: zweiter Katalysatorzuführabschnitt
- 422: zweiter Katalysatorabführabschnitt
- 500: Kathodenzuführverbindung
- 502: Kathodenzuführanschluss
- 504: siebtes Absperrorgan
- 506: Ejektor
- 508: zweite Heizeinrichtung
- 600: Kathodenabführverbindung
- 602: vierter Bypasspfad
- 604: Düse
- 606: achtes Absperrorgan
- 608: sechster Wärmetauscher
- 610: siebter Wärmetauscher
- 612: Kathodenabführanschluss
- 700: erste Zusatzzuführverbindung
- 702: erster Zusatzzuführanschluss
- 800: zweite Zusatzzuführverbindung
- 802: zweiter Zusatzzuführanschluss
- 900: Syntheseanlage
- 902: Synthesezuführabschnitt
- 904: Syntheseabführabschnitt
- 906: Synthesegaszuführverbindung
- 908: Kohlenwasserstoffabführverbindung
- 910: Restgasabführverbindung
- 1000: Verfahren
- 1002: erster Verfahrensschritt
- 1004: zweiter Verfahrensschritt
- 1006: dritter Verfahrensschritt
- 1008: vierter Verfahrensschritt
- 1010: fünfter Verfahrensschritt

## Patentansprüche

1. Hochtemperatur-Co-Elektrolysesystem (10), aufweisend:
- einen Elektrolysezellenstapel (100) mit einem Kathodenabschnitt (110), welcher einen Kathodenzuführabschnitt (112) und einen Kathodenabführabschnitt (114) aufweist, und einem Anodenabschnitt (120), welcher einen Anodenzuführabschnitt (122) und einen Anodenabführabschnitt (124) aufweist,
- einen mittels einer Anodenzuführverbindung (200) fluidtechnisch mit dem Anodenzuführabschnitt (112) gekoppelten Anodengasanschluss (202) zum Zuführen von Anodengas zum Anodenabschnitt (120),
- einen mittels einer Anodenabführverbindung (300) fluidtechnisch mit dem Anodenabführabschnitt (124) gekoppelten Anodenabführanschluss (308) zum Abführen von durch den Elektrolysezellenstapel (100) erzeugten Anodenabgasen,
- einen mittels einer Kathodenzuführverbindung (500) fluidtechnisch mit dem Kathodenzuführabschnitt (112) gekoppelten Kathodenzuführanschluss (502) zum Zuführen von Kathodengas zum Kathodenabschnitt (110), und
- einen mittels einer Kathodenabführverbindung (600) fluidtechnisch mit dem Kathodenabführabschnitt (114) gekoppelten Kathodenabführanschluss (612) zum Abführen von durch den Elektrolysezellenstapel (100) erzeugtem Synthesegas,
**dadurch gekennzeichnet, dass**
das Hochtemperatur-Co-Elektrolysesystem (10) ferner aufweist:
- einen Restgaszuführanschluss (402) zum Bereitstellen von Restgas, welches bei einem Syntheseprozess zur Herstellung von synthetischen Kohlenwasserstoffen aus dem von dem Elektrolysezellenstapel (100) erzeugten Synthesegas abgeschieden wird,
- zwei mittels einer Restgaszuführverbindung (400) fluidtechnisch mit dem Restgaszuführanschluss (402) gekoppelte und in der Anodenabführverbindung (300) angeordnete Katalysatoren (408, 418) zur katalytischen Verbrennung des Restgases, wobei zumindest einer der beiden Katalysatoren (404) als ein Oxidationskatalysator ausgebildet ist, und
- einen zweiten Wärmetauscher (302) und einen dritten Wärmetauscher (304), die in der Anodenabführverbindung (300) in Strömungsrichtung hinter zumindest je einem der beiden Katalysatoren (408, 418) angeordnet sind, wobei einer von dem zweiten und dritten Wärmetauscher (302, 304) wärmetechnisch mit der Anodenzuführverbindung (200) gekoppelt ist und wobei der andere von dem zweiten und dritten Wärmetauscher (302, 304) wärmetechnisch mit der Kathodenzuführverbindung (500) gekoppelt ist.

2. Hochtemperatur-Co-Elektrolysesystem (10) nach Anspruch 1, **dadurch gekennzeichnet, dass** die beiden Katalysatoren (408, 418) mit unterschiedlichen, sich aufteilenden Teilpfaden (404, 414) der Restgaszuführverbindung (400) gekoppelt sind.

3. Hochtemperatur-Co-Elektrolysesystem (10) nach Anspruch 2, **dadurch gekennzeichnet, dass** in zumindest einem der beiden Teilpfade (404, 414) ein fünftes und/oder ein sechstes Absperrorgan (406, 416) angeordnet ist.

4. Hochtemperatur-Co-Elektrolysesystem (10) nach Anspruch 2 oder 3, **dadurch gekennzeichnet, dass** jeder der beiden Teilpfade (404, 414) jeweils vor einem Katalysatorzuführabschnitt (410, 420) eines der beiden Katalysatoren (408, 418) mit der Anodenabführverbindung (300) fluidtechnisch verbunden ist, um das Restgas und das Anodenabgas zu einem Restgas-Anodenabgas-Gemisch zu vermischen.

5. Hochtemperatur-Co-Elektrolysesystem (10) nach einem der voranstehenden Ansprüche, **dadurch gekennzeichnet, dass** ein erster Katalysator (408) der beiden Katalysatoren (408, 418) in Strömungsrichtung der Anodenabführverbindung (300) hinter einem zweiten Katalysator (418) der beiden Katalysatoren (408, 418) angeordnet ist.

6. Hochtemperatur-Co-Elektrolysesystem (10) nach einem der voranstehenden Ansprüche, **dadurch gekennzeichnet, dass** ein vierter Wärmetauscher (306) in Strömungsrichtung in der Anodenabführverbindung (300) hinter dem zweiten und dritten Wärmetauscher (302, 304) angeordnet ist und wärmetechnisch mit einer ersten Zusatzzuführverbindung (700) gekoppelt ist, welche die Kathodenzuführverbindung (500) oder den Kathodenzuführabschnitt (112) mit einem ersten Zusatzzuführanschluss (702) zum Zuführen von Wasser oder Wasserdampf zum Kathodenzuführabschnitt (112) verbindet.

7. Hochtemperatur-Co-Elektrolysesystem (10) nach einem der voranstehenden Ansprüche, **dadurch gekennzeichnet, dass** ein fünfter Wärmetauscher (310) in Strömungsrichtung in der Anodenabführverbindung (300) hinter dem zweiten und dritten Wärmetauscher (302, 304) angeordnet ist und wärmetechnisch mit der Anodenzuführverbindung (200) gekoppelt ist.

8. Hochtemperatur-Co-Elektrolysesystem (10) nach einem der voranstehenden Ansprüche, **dadurch gekennzeichnet, dass** ein erster Wärmetauscher (224) in der Anodenzuführverbindung (200) angeordnet ist und in Strömungsrichtung vor den beiden Katalysatoren (408, 418) wärmetechnisch mit der Anodenabführverbindung (300) gekoppelt ist.

9. Hochtemperatur-Co-Elektrolysesystem (10) nach Anspruch 8, **dadurch gekennzeichnet, dass** ein dritter Bypasspfad (216) die Anodenzuführverbindung (200) in Strömungsrichtung vor dem ersten Wärmetauscher (224) mit der Anodenzuführverbindung (200) in Strömungsrichtung hinter dem ersten Wärmetauscher (224) miteinander verbindet, wobei in dem den ersten Wärmetauscher (224) umgehenden dritten Bypasspfad (216) ein drittes Absperrorgan (218) angeordnet ist und/oder in der Anodenzuführverbindung (200) in Strömungsrichtung hinter einer Abzweigung von der Anodenzuführverbindung (200) zum dritten Bypasspfad (216) und vor dem ersten Wärmetauscher (224) ein viertes Absperrorgan (222) angeordnet ist.

10. Hochtemperatur-Co-Elektrolysesystem (10) nach Anspruch 9, **dadurch gekennzeichnet, dass** in dem dritten Bypasspfad (216) eine erste Heizeinrichtung (220) angeordnet ist.

11. Hochtemperatur-Co-Elektrolysesystem (10) nach einem der voranstehenden Ansprüche, **dadurch gekennzeichnet, dass** die Anodenabführverbindung (300) in Strömungsrichtung vor zumindest einem der beiden Katalysatoren (408, 318) mittels eines ersten und/oder eines zweiten Bypasspfads (208, 212) mit der Anodenzuführverbindung (200) verbunden ist.

12. Hochtemperatur-Co-Elektrolysesystem (10) nach einem der voranstehenden Ansprüche, **dadurch gekennzeichnet, dass** das Hochtemperatur-Co-Elektrolysesystem (10) ferner einen ersten Zusatzzuführanschluss (702) zum Bereitstellen von erhitztem Wasserdampf aufweist, welcher bei der Kühlung in der Synthese zur Herstellung von synthetischen Kohlenwasserstoffen aus dem von dem Elektrolysezellenstapel (100) erzeugten Synthesegas erhitzt wird.

13. Hochtemperatur-Co-Elektrolyseanlage (30) mit einem Hochtemperatur-Co-Elektrolysesystem (10) nach einem der voranstehenden Ansprüche und einem Synthesesystem (20) mit einer Syntheseanlage (900), wobei
- der Kathodenabführanschluss (612) mittels einer Synthesegaszuführverbindung (906) fluidtechnisch mit der Syntheseanlage (900) gekoppelt ist,
- die Syntheseanlage (900) zur Synthese der aus dem von dem Elektrolysezellenstapel (100) erzeugten und mittels der Synthesegaszuführverbindung (906) zugeführten Synthesegas hergestellten synthetischen Kohlenwasserstoffe eingerichtet ist, und
- die Syntheseanlage (900) mittels einer Restgasabführverbindung (910) zum Bereitstellen von Restgas fluidtechnisch mit dem Restgaszuführanschluss (402) gekoppelt ist.

14. Verfahren (1000) zum Erzeugen von Synthesegas mittels eines Hochtemperatur-Co-Elektrolysesystems (10) aufweisend die Schritte:
- Zuführen von aus einem Syntheseprozess, bei dem Synthesegas in Kohlenwasserstoffe umgesetzt wird, abgeschiedenen Restgases zu zwei Katalysatoren (408, 418) eines Hochtemperatur-Co-Elektrolysesystems (10), wobei zumindest einer der beiden Katalysatoren (404) als ein Oxidationskatalysator ausgebildet ist,
- katalytisches Verbrennen des Restgases mittels der beiden Katalysatoren (408, 418) des Hochtemperatur-Co-Elektrolysesystem s (10),
- Übertragen von Wärme von Katalysator-Abgasströmen der katalytischen Verbrennung der beiden Katalysatoren (408, 418) mittels zweier Wärmetauscher (302, 304) jeweils an ein Anodengas und ein Kathodengas,
- Zuführen des Anodengases, des Kathodengases und von elektrischem Strom zu einem Elektrolysezellenstapel (100) des Hochtemperatur-Co-Elektrolysesystems (10), und
- Erzeugen des Synthesegases mittels des Elektrolysezellenstapels (100) aus dem zugeführten Anodengas, Kathodengas und elektrischem Strom.

15. Verfahren (1000) nach Anspruch 14, **dadurch gekennzeichnet, dass** der Restgasstrom in zwei Teilpfade (404, 414) aufgeteilt und mittels je eines der beiden Teilpfade (404, 414) je einem der beiden Katalysatoren (408, 418) Restgas zugeführt wird.

## Claims

1. A high-temperature co-electrolysis system (10), comprising:
- an electrolysis cell stack (100) with a cathode section (110) having a cathode supply section (112) and a cathode discharge section (114), and an anode section (120) having an anode supply section (122) and an anode discharge section (124),
- an anode gas connection (202) fluidly coupled to the anode supply section (112) by means of an anode supply connection (200) for supplying anode gas to the anode section (120),
- an anode discharge connection (308) fluidly coupled to the anode discharge section (124) by means of an anode discharge connection (300) for discharging the anode gas flowing through the electrolysis cell stack (100) generated anode exhaust gases,
- a cathode supply connection (502) fluidly coupled to the cathode supply section (112) by means of a cathode supply connection (500) for supplying cathode gas to the cathode section (110), and
- a cathode discharge connection (612) fluidly coupled to the cathode discharge section (114) by means of a cathode discharge connection (600) for discharging synthesis gas generated by the electrolysis cell stack (100),
**characterized in that**
the high-temperature co-electrolysis system (10) further comprises:
- a residual gas supply connection (402) for providing residual gas which is separated from the synthesis gas generated by the electrolysis cell stack (100) during a synthesis process for producing synthetic hydrocarbons,
- two catalysts (408, 418) fluidically coupled to the residual gas supply connection (402) by means of a residual gas supply connection (400) and arranged in the anode discharge connection (300) for the catalytic combustion of the residual gas, wherein at least one of the two catalysts (404) is designed as an oxidation catalyst, and
- a second heat exchanger (302) and a third heat exchanger (304) arranged in the anode discharge connection (300) downstream of at least one of the two catalysts (408, 418) in the flow direction, wherein one of the second and third heat exchangers (302, 304) is thermally coupled to the anode supply connection (200) and wherein the other of the second and third heat exchangers (302, 304) is thermally coupled to the cathode supply connection (500) is coupled

2. High-temperature co-electrolysis system (10) according to claim 1, **characterized in that** the two catalysts (408, 418) are coupled to different, dividing sub-paths (404, 414) of the residual gas supply connection (400).

3. High-temperature co-electrolysis system (10) according to claim 2, **characterized in that** a fifth and/or a sixth shut-off device (406, 416) is arranged in at least one of the two partial paths (404, 414).

4. High-temperature co-electrolysis system (10) according to claim 2 or 3, **characterized in that** each of the two partial paths (404, 414) is fluidly connected to the anode discharge connection (300) upstream of a catalyst feed section (410, 420) of one of the two catalysts (408, 418) in order to mix the residual gas and the anode exhaust gas to form a residual gas-anode exhaust gas mixture.

5. High-temperature co-electrolysis system (10) according to one of the preceding claims, **characterized in that** a first catalyst (408) of the two catalysts (408, 418) is arranged downstream of a second catalyst (418) of the two catalysts (408, 418) in the flow direction of the anode discharge connection (300).

6. High-temperature co-electrolysis system (10) according to one of the preceding claims, **characterized in that** a fourth heat exchanger (306) is arranged downstream of the second and third heat exchangers (302, 304) in the anode discharge connection (300) and is thermally coupled to a first auxiliary supply connection (700) which connects the cathode supply connection (500) or the cathode supply section (112) to a first auxiliary supply connection (702) for supplying water or steam to the cathode supply section (112).

7. High-temperature co-electrolysis system (10) according to one of the preceding claims, **characterized in that** a fifth heat exchanger (310) is arranged in the flow direction in the anode discharge connection (300) downstream of the second and third heat exchangers (302, 304) and is thermally coupled to the anode supply connection (200).

8. High-temperature co-electrolysis system (10) according to one of the preceding claims, **characterized in that** a first heat exchanger (224) is arranged in the anode supply connection (200) and is thermally coupled to the anode discharge connection (300) upstream of the two catalysts (408, 418) in the flow direction.

9. High-temperature co-electrolysis system (10) according to claim 8, **characterized in that** a third bypass path (216) connects the anode supply connection (200) upstream of the first heat exchanger (224) with the anode supply connection (200) downstream of the first heat exchanger (224), wherein a third shut-off device (218) is arranged in the third bypass path (216) bypassing the first heat exchanger (224), and/or a fourth shut-off device (222) is arranged in the anode supply connection (200) downstream of a branch from the anode supply connection (200) to the third bypass path (216) and upstream of the first heat exchanger (224).

10. High-temperature co-electrolysis system (10) according to claim 9, **characterized in that** a first heating device (220) is arranged in the third bypass path (216).

11. High-temperature co-electrolysis system (10) according to one of the preceding claims, **characterized in that** the anode discharge connection (300) is connected to the anode supply connection (200) upstream of at least one of the two catalysts (408, 318) by means of a first and/or a second bypass path (208, 212).

12. High-temperature co-electrolysis system (10) according to one of the preceding claims, **characterized in that** the high-temperature co-electrolysis system (10) further comprises a first auxiliary supply port (702) for providing heated steam, which is heated during cooling in the synthesis for producing synthetic hydrocarbons from the synthesis gas generated by the electrolysis cell stack (100).

13. A high-temperature co-electrolysis plant (30) comprising a high-temperature co-electrolysis system (10) according to one of the preceding claims and a synthesis system (20) comprising a synthesis plant (900), wherein:
- the cathode discharge connection (612) is fluidly coupled to the synthesis plant (900) by means of a synthesis gas supply connection (906),
- the synthesis plant (900) is configured to synthesize the synthetic hydrocarbons produced from the synthesis gas generated by the electrolysis cell stack (100) and supplied by means of the synthesis gas supply connection (906), and
- the synthesis plant (900) is fluidly coupled to the residual gas supply connection (402) by means of a residual gas discharge connection (910) for providing residual gas.

14. A method (1000) for generating synthesis gas using a high-temperature co-electrolysis system (10), comprising the steps of:
- feeding residual gas separated from a synthesis process in which synthesis gas is converted into hydrocarbons to two catalysts (408, 418) of a high-temperature co-electrolysis system (10), wherein at least one of the two catalysts (404) is designed as an oxidation catalyst,
- catalytically combusting the residual gas using the two catalysts (408, 418) of the high-temperature co-electrolysis system (10),
- transferring heat from catalyst exhaust streams from the catalytic combustion of the two catalysts (408, 418) to an anode gas and a cathode gas, respectively, using two heat exchangers (302, 304),
- feeding the anode gas, cathode gas, and electric current to an electrolysis cell stack (100) of the high-temperature co-electrolysis system (10), and
- generating the synthesis gas by means of the electrolysis cell stack (100) from the supplied anode gas, cathode gas, and electric current.

15. Method (1000) according to claim 14, **characterized in that** the residual gas stream is divided into two partial paths (404, 414) and residual gas is supplied to one of the two catalysts (408, 418) by means of one of the two partial paths (404, 414).

## Revendications

1. Système de co-électrolyse haute température (10), comprenant :
- un empilement de cellules d'électrolyse (100) comprenant une section cathodique (110) dotée d'une section d'alimentation cathodique (112) et d'une section de décharge cathodique (114), et une section anodique (120) dotée d'une section d'alimentation anodique (122) et d'une section de décharge anodique (124).
- un raccord de gaz anodique (202) fluidiquement relié à la section d'alimentation anodique (112) par un raccord d'alimentation anodique (200) pour alimenter la section anodique (120) en gaz anodique.
- un raccord de décharge anodique (308) fluidiquement relié à la section de décharge anodique (124) par un raccord de décharge anodique (300) pour évacuer les gaz d'échappement anodiques générés par l'empilement de cellules d'électrolyse (100).
- un raccord d'alimentation cathodique (502) fluidiquement relié à la section d'alimentation cathodique (112). au moyen d'une connexion d'alimentation cathodique (500) pour alimenter la section cathodique (110) en gaz cathodique, et - une connexion de décharge cathodique (612) couplée fluidiquement à la section de décharge cathodique (114) au moyen d'une connexion de décharge cathodique (600) pour évacuer le gaz de synthèse généré par la pile de cellules d'électrolyse (100),
**caractérisé en ce que**
le système de co-électrolyse haute température (10) comprend en outre :
- un raccord d'alimentation en gaz résiduaire (402) pour l'alimentation en gaz résiduaire séparé du gaz de synthèse généré par la pile de cellules d'électrolyse (100) lors d'un processus de synthèse d'hydrocarbures synthétiques ;
- deux catalyseurs (408, 418) raccordés fluidiquement au raccord d'alimentation en gaz résiduaire (402) par un raccord d'alimentation en gaz résiduaire (400) et disposés dans le raccord de décharge anodique (300) pour la combustion catalytique du gaz résiduaire, au moins l'un des deux catalyseurs (404) étant conçu comme catalyseur d'oxydation ; et
- un deuxième échangeur de chaleur (302) et un troisième échangeur de chaleur (304) disposés dans le raccord de décharge anodique (300) en aval d'au moins l'un des deux catalyseurs (408, 418) dans le sens d'écoulement. l'un des deuxième et troisième échangeurs de chaleur (302, 304) est couplé thermiquement à la connexion d'alimentation de l'anode (200) et dans lequel l'autre des deuxième et troisième échangeurs de chaleur (302, 304) est couplé thermiquement à la connexion d'alimentation de la cathode (500).

2. Système de co-électrolyse à haute température (10) selon la revendication 1, **caractérisé en ce que** les deux catalyseurs (408, 418) sont couplés à des sous-chemins de séparation différents (404, 414) du raccordement d'alimentation en gaz résiduel (400).

3. Système de co-électrolyse à haute température (10) selon la revendication 2, **caractérisé en ce qu'**un cinquième et/ou un sixième dispositif d'arrêt (406, 416) est disposé dans au moins l'un des deux trajets partiels (404, 414).

4. Système de co-électrolyse à haute température (10) selon la revendication 2 ou 3, **caractérisé en ce que** chacun des deux trajets partiels (404, 414) est relié fluidiquement au raccord de décharge d'anode (300) en amont d'une section d'alimentation en catalyseur (410, 420) de l'un des deux catalyseurs (408, 418) afin de mélanger le gaz résiduel et le gaz d'échappement d'anode pour former un mélange gaz résiduel-gaz d'échappement d'anode.

5. Système de co-électrolyse haute température (10) selon l'une des revendications précédentes, **caractérisé en ce qu'**un premier catalyseur (408) des deux catalyseurs (408, 418) est disposé en aval d'un second catalyseur (418) des deux catalyseurs (408, 418) dans le sens d'écoulement du raccord de décharge d'anode (300).

6. Système de co-électrolyse haute température (10) selon l'une des revendications précédentes, **caractérisé en ce qu'**un quatrième échangeur de chaleur (306) est disposé en aval des deuxième et troisième échangeurs de chaleur (302, 304) dans le raccord de décharge anodique (300) et est couplé thermiquement à un premier raccord d'alimentation auxiliaire (700) reliant le raccord d'alimentation cathodique (500) ou la section d'alimentation cathodique (112) à un premier raccord d'alimentation auxiliaire (702) pour l'alimentation en eau ou en vapeur de la section d'alimentation cathodique (112).

7. Système de co-électrolyse à haute température (10) selon l'une des revendications précédentes, **caractérisé en ce qu'**un cinquième échangeur de chaleur (310) est disposé dans le raccord d'évacuation d'anode (300) en aval des deuxième et troisième échangeurs de chaleur (302, 304) et est couplé thermiquement au raccord d'alimentation d'anode (200).

8. Système de co-électrolyse haute température (10) selon l'une des revendications précédentes, **caractérisé en ce qu'**un premier échangeur de chaleur (224) est disposé dans le raccord d'alimentation anodique (200) et est couplé thermiquement au raccord de décharge anodique (300) en amont des deux catalyseurs (408, 418) dans le sens d'écoulement.

9. Système de co-électrolyse haute température (10) selon la revendication 8, **caractérisé en ce qu'**une troisième voie de dérivation (216) relie le raccord d'alimentation anodique (200) en amont du premier échangeur de chaleur (224) à celui en aval du premier échangeur de chaleur (224). Un troisième dispositif d'arrêt (218) est disposé dans la troisième voie de dérivation (216) contournant le premier échangeur de chaleur (224), et/ou un quatrième dispositif d'arrêt (222) est disposé dans le raccord d'alimentation anodique (200) en aval d'une dérivation reliant le raccord d'alimentation anodique (200) à la troisième voie de dérivation (216) et en amont du premier échangeur de chaleur (224).

10. Système de co-électrolyse à haute température (10) selon la revendication 9, **caractérisé en ce qu'**un premier dispositif de chauffage (220) est disposé dans le troisième trajet de dérivation (216).

11. Système de co-électrolyse à haute température (10) selon l'une des revendications précédentes, **caractérisé en ce que** le raccord de décharge d'anode (300) est relié au raccord d'alimentation d'anode (200) en amont d'au moins l'un des deux catalyseurs (408, 318) au moyen d'un premier et/ou d'un deuxième chemin de dérivation (208, 212).

12. Système de co-électrolyse haute température (10) selon l'une des revendications précédentes, **caractérisé en ce qu'**il comprend en outre un premier orifice d'alimentation auxiliaire (702) pour fournir de la vapeur chauffée, chauffée lors du refroidissement lors de la synthèse pour produire des hydrocarbures synthétiques à partir du gaz de synthèse généré par la pile de cellules d'électrolyse (100).

13. Installation de co-électrolyse haute température (30) comprenant un système de co-électrolyse haute température (10) selon l'une quelconque des revendications précédentes et un système de synthèse (20) comprenant une installation de synthèse (900). Dans cette installation :
- le raccord de décharge cathodique (612) est fluidiquement raccordé à l'installation de synthèse (900) par un raccord d'alimentation en gaz de synthèse (906).
- l'installation de synthèse (900) est configurée pour synthétiser les hydrocarbures synthétiques produits à partir du gaz de synthèse généré par la pile de cellules d'électrolyse (100) et alimenté par le raccord d'alimentation en gaz de synthèse (906).
- l'installation de synthèse (900) est fluidiquement raccordée au raccord d'alimentation en gaz résiduel (402) par un raccord d'évacuation de gaz résiduel (910).

14. Procédé (1000) de production de gaz de synthèse utilisant un système de co-électrolyse haute température (10), comprenant les étapes suivantes :
- alimentation de deux catalyseurs (408, 418) d'un système de co-électrolyse haute température (10) en gaz résiduel séparé d'un procédé de synthèse de conversion en hydrocarbures, au moins l'un des deux catalyseurs (404) étant conçu comme catalyseur d'oxydation ;
- combustion catalytique du gaz résiduel à l'aide des deux catalyseurs (408, 418) du système de co-électrolyse haute température (10) ;
- transfert de chaleur des gaz d'échappement issus de la combustion catalytique des deux catalyseurs (408, 418) vers un gaz d'anode et un gaz de cathode, respectivement, à l'aide de deux échangeurs de chaleur (302, 304) ;
- alimentation d'une pile de cellules d'électrolyse en gaz d'anode, en gaz de cathode et en courant électrique. (100) du système de co-électrolyse haute température (10), et
- générer le gaz de synthèse au moyen de la pile de cellules d'électrolyse (100) à partir du gaz anodique, du gaz cathodique et du courant électrique fournis.

15. Procédé (1000) selon la revendication 14, **caractérisé en ce que** le flux de gaz résiduel est divisé en deux trajets partiels (404, 414) et le gaz résiduel est amené à l'un des deux catalyseurs (408, 418) au moyen de l'un des deux trajets partiels (404, 414).
